Europäisches Patentamt

European Patent Office

Office européen des brevets

(11) Numéro de publication: **0 063 970**
**B1**

(12) **FASCICULE DE BREVET EUROPEEN**

(45) Date de publication du fascicule du brevet: 24.10.84

(51) Int. Cl.³: **H 02 B 1/20**

(21) Numéro de dépôt: **82400546.6**

(22) Date de dépôt: **25.03.82**

(54) **Jeu de barre d'alimentation pour appareillage modulaire d'un coffret électrique.**

(30) Priorité: **22.04.81 FR 8108161**

(43) Date de publication de la demande: **03.11.82 Bulletin 82/44**

(45) Mention de la délivrance du brevet: **24.10.84 Bulletin 84/43**

(84) Etats contractants désignés: **BE CH DE GB IT LI NL SE**

(56) Documents cités: **DE - A - 1 690 044**
**FR - A - 2 437 715**

(73) Titulaire: **MERLIN GERIN, Rue Henri Tarze, F-38050 Grenoble Cedex (FR)**

(72) Inventeur: **Giraud, Jean-Michel, La Chavanne, F-73800 Montmelian (FR)**

(74) Mandataire: **Kern, Paul et ai, Merlin Gerin Sce. Brevets 20, rue Henri Tarze, F-38050 Grenoble Cedex (FR)**

ACTORUM AG

## Description

L'invention est relative à un coffret électrique de logement d'appareillage modulaire à basse tension, comprenant notamment des disjoncteurs, des coupe-circuit, des interrupteurs, etc., répartis dans une pluralité de rangées de répartition disposées horizontalement dans des plans parallèles échelonnés dans le sens de la hauteur du coffret selon des niveaux différents, chaque rangée d'un niveau déterminé comprenant un assemblage de modules à boîtiers moulés solidaires d'un rail-support, l'alimentation électrique des différents modules d'une même rangée s'effectuant par l'intermédiaire d'un peigne de pontage raccordé électriquement au réseau multipolaire et s'étendant dans la direction horizontale du rail-support en assurant l'interconnexion des modules de même phase.

Selon un dispositif connu du genre mentionné, des barrettes de répartition des phases du neutre et de la terre sont agencées en tête du tableau et sont raccordées électriquement aux câbles correspondants d'arrivées du réseau. L'alimentation de chaque rangée horizontale de modules s'effectue au moyen des peignes de pontage préfabriqués, du type unipolaire, bipolaire, tripolaire ou tétrapolaire. Chaque peigne de pontage est alimenté par un connecteur fixé sur l'une des bornes de raccordement d'un module, le connecteur étant relié par un câble classique de liaison à la barrette de répartition correspondante.

Le but de l'invention consiste à réduire la main-d'œuvre de câblage et à faciliter le travail de l'installateur du coffret en proposant un système d'alimentation préfabriqué et fonctionnel.

L'invention est caractérisée par le fait qu'un jeu de barres multipolaire, agencé à l'intérieur du coffret dans le sens de la hauteur, s'étend verticalement entre les niveaux extrêmes des différentes rangées de répartition, et que le peigne de pontage des modules de chaque rangée horizontale est connecté électriquement à un niveau prédéterminé audit jeu de barres vertical par l'intermédiaire d'un bloc de liaison fixé mécaniquement au rail-support de la rangée correspondante pour assurer le maintien du jeu de barres.

Les blocs de liaison à structure unipolaire ou multipolaire sont encliquetés sur le rail-support et assurent la double fonction de maintien du jeu de barres vertical et de liaison électrique entre ce dernier et le peigne de pontage de chaque rangée horizontale.

Selon une caractéristique de l'invention, chaque bloc de liaison comporte un boîtier isolant renfermant par pôle un conducteur interne de raccordement du peigne de pontage à la barre correspondante du jeu multipolaire vertical, ledit conducteur interne venant en contact direct avec ladite barre lors de l'insertion de cette dernière dans le bloc de liaison. Le boîtier de chaque bloc de liaison comprend des orifices d'accès au conducteur interne associé de manière à autoriser une insertion latérale ou longitudinale des barres.

Selon une autre caractéristique de l'invention, le conducteur interne de chaque bloc de liaison présente une forme de U dont la portion médiane sert d'organe de connexion avec la barre correspondante, et dont les extrémités opposées sont raccordées respectivement à une plage et à une cage de branchement du peigne de pontage de la rangée correspondante, le choix du côté de raccordement de chaque bloc de liaison étant fonction de la nature des bornes des modules à installer.

D'autres avantages et caractéristiques ressortiront plus clairement de l'exposé qui va suivre de différents modes de mise en œuvre de l'invention, donnés à titre d'exemples non limitatifs et représentés aux dessins annexés, dans lesquels:

la fig. 1 est une vue schématique en élévation d'un coffret électrique équipé d'un jeu de barres selon l'invention;

la fig. 2 représente une vue en coupe d'un bloc de liaison électrique entre une barre et un peigne de pontage, les demi-vues de gauche et de droite montrant respectivement l'application d'un raccordement d'un appareil à plage et à cage;

la fig. 3 est une vue partielle en perspective d'une rangée de la fig. 1;

la fig. 4 est une vue similaire à celle de la fig. 3 d'une variante de réalisation;

la fig. 5 représente une vue partielle en plan d'une variante de réalisation du bloc de liaison.

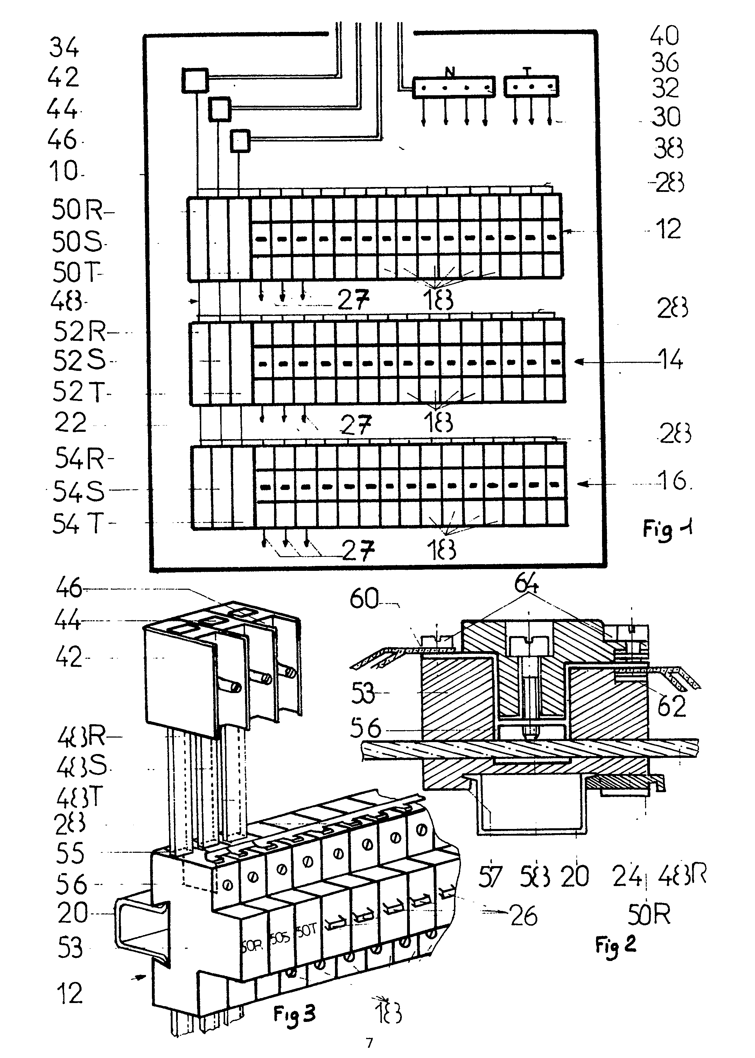

Sur les fig. 1 à 3, un coffret 10 d'appareillage électrique modulaire à basse tension comporte une pluralité de rangées 12, 14, 16 de répartition, par exemple trois, s'étendant horizontalement dans des plans parallèles superposés à des niveaux différents dans le sens de la hauteur du coffret 10. Un nombre supérieur de rangées de répartition peut bien entendu équiper le coffret. Chaque rangée 12, 14, 16 présente une capacité prédéterminée en pas de 9 mm susceptible de recevoir un empilage d'appareillage modulaire à boîtiers moulés, notamment des disjoncteurs magnétothermiques ou différentiels, des coupe-circuit à fusibles, des interrupteurs, etc. Les boîtiers isolants des différents modules 18 assemblés d'une même rangée sont assujettis par leurs faces postérieures à un rail-support 20 à profil DIN horizontal, fixé par des moyens d'assemblage (non représentés) sur un châssis solidaire de la plaque de fond 22 du coffret. L'assemblage de chaque module 18 sur le rail 20 s'effectue d'une manière classique au moyen d'un verrou 24 venant s'encliqueter sous une aile du rail-support 20. A l'opposé de ce dernier se trouve la face antérieure de chaque module 18 pourvue d'une manette 26 de commande accessible à l'opérateur depuis la face avant du coffret 10.

Chaque module 18 comprend deux faces latérales étroites de raccordement, la face inférieure servant à la connexion d'un départ 27 vers un récepteur, et la face opposée supérieure étant dotée d'une borne d'entrée coopérant avec un peigne ou une barre de pontage 28. Ce dernier sert de moyen d'interconnexion des différents modules 18 appartenant à la même phase d'une même rangée 12, 14, 16, et présente une structure préfabriquée unipolaire ou multipolaire. Des barrettes de répartition 30, 32 du neutre N et de la terre T sont agencées à l'intérieur du coffret, à l'écart du volume central occupé par les rangées 12 à 16 des modules 18, par exemple au voisinage de l'orifice d'accès des câbles d'arrivée 34, 36, 38 et 40.

Selon l'invention, les câbles d'arrivée 34, 36, 38 correspondant aux conducteurs de phase R, S, T d'un réseau triphasé avec neutre sont connectés directement à des bornes de raccordement 42, 44, 46 d'un jeu de barres 48 triphasé pour l'alimentation commune des peignes de pontage 28 des différentes rangées 12, 14, 16. Les trois barres 48R, 48S, 48T verticales du jeu 48 s'étendent parallèlement entre elles dans le sens de la hauteur à l'intérieur du coffret 10, et perpendiculairement devant l'une des extrémités de chaque rangée 12, 14, 16. Le jeu de barres 48 vertical alimente l'ensemble des peignes de pontage 28 par l'intermédiaire de blocs de liaison unipolaires 50R, 50S, 50T; 52R, 52S, 52T; 54R, 54S, 54T affectés à des niveaux différents aux phases correspondantes R, S, T de chaque rangée 12, 14, 16.

Chaque bloc de liaison 50R à 54T comporte un boîtier isolant 53 muni d'orifices 55 d'introduction des barres 48R, 48S, 48T, et d'un socle 57 à verrou 24 encliquetable sur le rail-support 20 des modules 18 d'une même rangée. Un conducteur 56 de raccordement est intégré à l'intérieur de chaque bloc de liaison unipolaire pour assurer la connexion électrique entre la barre correspondante 48R, 48S, 48T et le peigne de raccordement 28 de chaque rangée 12, 14, 16. Après insertion de la barre 48R dans le bloc de liaison correspondant, le contact électrique dans la zone de jonction entre la barre et la portion médiane du conducteur 56 interne est assuré par le serrage d'une vis 58 logée dans le corps du boîtier de chaque bloc de liaison (fig. 2). L'une des extrémités du conducteur de raccordement 56 est conformée en plage 60 de connexion du peigne de pontage 28 (voir demi-vue de gauche, fig. 2), tandis que l'autre extrémité est solidaire d'une cage 62 de branchement (voir demi-vue de droite, fig. 2). Le choix du côté de raccordement de chaque bloc de liaison est fonction des modules 18 à installer, selon qu'il s'agit d'appareillage avec bornes à plage, notamment des coupe-circuit ou à cage comme des disjoncteurs. Le peigne de pontage 28 est connecté à la plage 60 ou à la cage 62 du conducteur interne 56 de chaque bloc de liaison unipolaire par une vis de fixation 64.

Sur les fig. 1 à 3, les barres 48R, 48S, 48T, rectangulaires sont logées à plat dans les blocs de liaison 50R, 50S, 50T correspondants, et leur insertion latérale ou longitudinale dans les orifices 55 des boîtiers 53 est suivie du serrage des vis 58.

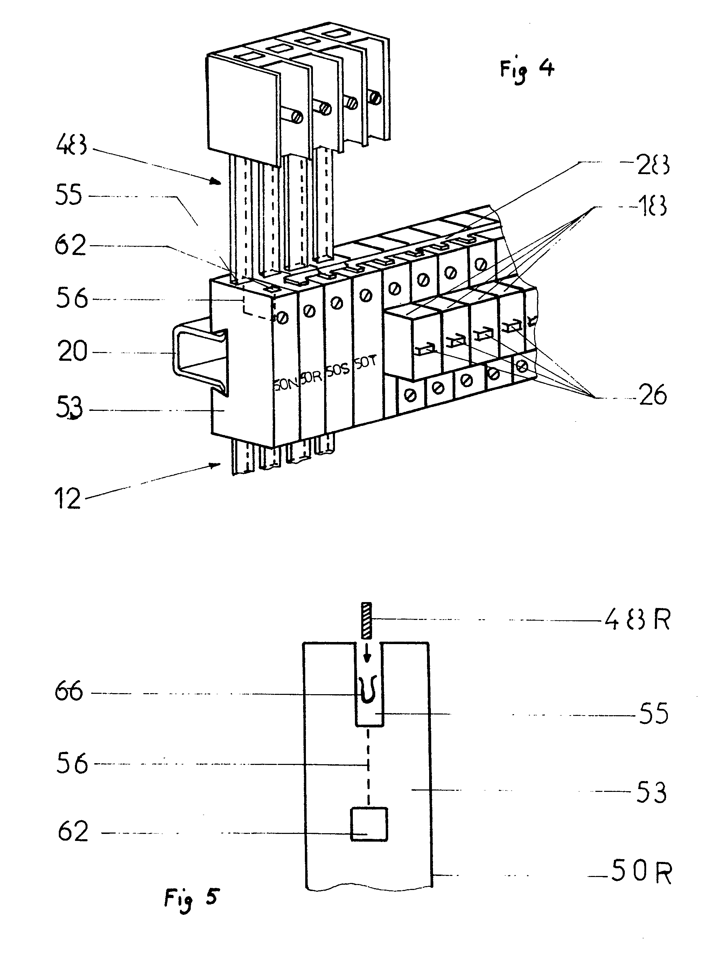

Selon la variante de la fig. 5, chaque barre verticale est insérée de chant dans un contact élastique en forme de pince 66 solidaire du conducteur interne de liaison 56, et agencé dans l'orifice 55 du boîtier 53. La vis de serrage 58 est dans ce cas supprimée.

Les bornes de raccordement 42, 44, 46 des câbles d'arrivée 34, 36, 38, et les blocs de liaison 50R à 54T selon les fig. 1 à 3, sont du type unipolaire. Il est bien entendu que l'on pourrait les remplacer par des bornes de raccordement tripolaire monobloc, et au niveau de chaque rangée 12, 14, 16 par des blocs de liaison tripolaire 50, 52, 54. Le boîtier 53 de chaque bloc de liaison unipolaire 50R à 54T présente une face antérieure de forme similaire à celle des modules 18 de manière à faire saillie de la face avant du coffret 10 lors de la mise en place d'un plastron (non représenté).

Selon la variante de la fig. 4, les peignes de pontage 28 des rangées de répartition 12, 14, 16 sont alimentés au moyen d'un jeu de barres 48 tétrapolaire alimenté par les câbles d'arrivée 34 à 40 triphasés et neutres. La barrette de répartition 30 du neutre N est dans ce cas supprimée. La hauteur des boîtiers 53 des blocs de liaison est inférieure à celle des modules 18 juxtaposés d'une même rangée 12, 14, 16. La mise en place du plastron sur la face avant du coffret 10 cache entièrement les faces antérieures des blocs de liaison 50R à 54T, seuls les compartiments avant à manettes 26 des modules 18 faisant saillie de la fenêtre rectangulaire du plastron.

L'utilisation du jeu de barres 48 préfabriqué pour l'alimentation des modules 18 des diverses rangées 12, 14, 16 facilite le travail de câblage de l'installateur en supprimant les connecteurs et les câbles traditionnels de liaison. L'alimentation des peignes de pontage 28 des modules 18 empilés dans les rangées 12 à 16 horizontales est effectuée directement par le jeu de barres 48 vertical dont la mise en place intervient lors de l'encliquetage des blocs de liaison 50R à 54T sur les rails 20 DIN des diverses rangées. Les blocs de liaison en position encliquetée assurent la double fonction de maintien du jeu de barres 48 et de liaison électrique avec les peignes de pontage 28.

## Revendications

1. Coffret électrique de logement d'appareillage modulaire à basse tension, comprenant notamment des disjoncteurs, des coupe-circuit, des interrupteurs, etc., répartis dans une pluralité de rangées (12, 14, 16) de répartition disposées horizontalement dans des plans parallèles échelonnés dans le sens de la hauteur du coffret selon des niveaux différents, chaque rangée d'un niveau déterminé comprenant un assemblage de modules (18) à boîtiers moulés solidaires d'un rail-support (20), l'alimentation électrique des différents modules (18) d'une même rangée (12, 14, 16) s'effectuant par l'intermédiaire d'un peigne de pontage (28) raccordé électriquement au réseau multipolaire et s'étendant dans la direction horizontale du rail-support (20) en assurant l'interconnexion des modules (18) de même phase, caractérisé par le fait qu'un jeu de barres (48) multipolaire, agencé à l'intérieur du coffret (10) dans le sens de la hauteur, s'étend verticalement entre les niveaux extrêmes des différentes rangées de répartition (12 à 16), et que le peigne de pontage (28) des modules (18) de chaque rangée horizontale (12 à 16) est connecté électriquement à un niveau prédéterminé audit jeu de barres (48) vertical par l'intermédiaire d'un bloc de liaison (50R à 50T) fixé mécaniquement au rail-support (20) de la rangée correspondante pour assurer le maintien du jeu de barres (48).

2. Coffret électrique de logement d'appareillage modulaire selon la revendication 1, caractérisé par le fait que ledit bloc de liaision (50R à 54T) comporte un boîtier (53) isolant renfermant par pôle un conducteur interne (56) de raccordement du peigne de pontage (28) à la barre (48R, 48S, 48T, 48N) correspondante du jeu multipolaire (48) vertical, ledit conducteur interne venant en contact direct avec ladite barre lors de l'insertion de cette dernière dans le bloc de liaison.

3. Coffret électrique de logement d'appareillage modulaire selon la revendication 2, caractérisé par le fait que le boîtier (53) de chaque bloc de liaison (50R à 54T) comprend des orifices (55) d'accès au conducteur interne (56) associé, lesdits orifices étant conformés pour autoriser une insertion latérale ou longitudinale de la barre (48R, 48S, 48T, 48N).

4. Coffret électrique de logement d'appareillage modulaire selon la revendication 3, caractérisé par le fait qu'un organe de serrage (58) est agencé dans le boîtier (53) de chaque bloc de liaison (50R à 50T) pour assurer un bon contact électrique entre le conducteur interne (56) et la barre (48R, 48S, 48T, 48N) après insertion de cette dernière dans les orifices (55) correspondants.

5. Coffret électrique de logement d'appareillage modulaire selon l'une des revendications 3 ou 4, caractérisé par le fait que chaque barre (48R, 48S, 48T, 48N) du jeu multipolaire (48) vertical présente une section rectangulaire et est logée à plat dans le bloc de liaison (50R à 50T) correspondant de manière à obtenir une surface de contact maximale avec le conducteur interne (56) associé.

6. Coffret électrique de logement d'appareillage modulaire selon la revendication 3, caractérisé par le fait que chaque barre (48R, 48S, 48T, 48N) de section rectangulaire est insérée de chant dans les orifices (55) pour coopérer avec un contact (66) élastique en forme de pince solidaire du conducteur interne (56).

7. Coffret électrique de logement d'appareillage modulaire selon l'une des revendications 2 à 6, caractérisé par le fait que le conducteur interne (56) de chaque bloc de liaison (50R à 54T) présente une forme de U dont la portion médiane sert d'organe de connexion avec la barre (48R, 48S, 48T, 48N) correspondante, et dont les extrémités opposées sont raccordées respectivement à une plage (60) et une cage (62) de branchement du peigne de pontage (28) de la rangée (12, 14, 16) correspondante, le choix du côté de raccordement de chaque bloc de liaison étant fonction de la nature des bornes des modules (18) à installer.

8. Coffret électrique de logement d'appareillage modulaire selon l'une des revendications précédentes, caractérisé par le fait que les câbles d'arrivées (34, 36, 38, 40) du réseau multipolaire sont branchés directement à des bornes de raccordement du jeu de barres (48) vertical, et que les blocs de liaison (50R à 54T) présentent au niveau de chaque rangée (12, 14, 16) une structure unipolaire ou multipolaire.

9. Coffret électrique de logement d'appareillage modulaire selon l'une des revendications précédentes, caractérisé par le fait que la hauteur du boîtier (53) de chaque bloc de liaison (50R à 54T) correspond à celle des boîtiers similaires des modules (18) juxtaposés d'une même rangée (12, 14, 16) de manière à faire saillie de la face avant du coffret (10) lors de la mise en place d'un plastron.

10. Coffret électrique de logement d'appareillage modulaire, selon l'une des revendications 1 à 8, caractérisé par le fait que la hauteur du boîtier (53) de chaque bloc de liaison (50R à 54T) est inférieure à celle des boîtiers des modules (18) juxtaposés d'une même rangée, telle que la mise en place d'un plastron sur la face avant du coffret (10) cache les faces antérieures desdits blocs de liaison.

**Patentansprüche**

1. Elektrischer Kasten zur Aufnahme von Niederspannungs-Modulgeräten, insbesondere Leistungsschalter, Sicherungen, Lastschalter usw., verteilt in mehreren Verteilerreihen (12-16), die waagerecht in parallelen Ebenen angeordnet sind, die in Höhenrichtung des Kastens gemäss verschiedener Niveaus gestuft sind, wobei jede Reihe eines bestimmten Niveaus eine Modulverbindung (18) aufweist mit Isolierstoffgehäusen, die mit einer Stützschiene (20) verbunden sind, und wobei die elektrische Versorgung der verschiedenen Module (18) einer selben Reihe (12-16) mittels eines Überbrückungskammes (28) erfolgt, welcher elektrisch mit dem mehrpoligen Netz verbunden ist und sich in die waagerechte Richtung der Stützschiene (20) erstreckt, und welcher die elektrischer Verbindung der gleichphasigen Module (18) gewährleistet, dadurch gekennzeichnet, dass ein mehrpoliges Sammelschienensystem (48) im Innern des Kastens (10) in Höhenrichtung angeordnet ist, und sich senkrecht zwischen den äussersten Niveaus der verschiedenen Verteilerreihen (12-16) erstreckt, und dass der Überbrückungskamm (28) der Module (18) jeder waagerechten Reihe (12-16) elektrisch auf einem vorbestimmten Niveau mit dem genannten senkrechten Sammelschienensystem (48) verbunden ist, mittels eines Verbindungssatzes (50R-54T), der mechanisch an der Stützschiene der entsprechenden Reihe (20) befestigt ist, um die Aufrechterhaltung des Sammelschienensystems (48) zu gewährleisten.

2. Elektrischer Kasten zur Aufnahme von Modulgeräten gemäss Anspruch 1, dadurch gekennzeichnet, dass der genannte Verbindungssatz (50R-54T) ein Isoliergehäuse (53) aufweist, das je Pol einen internen Leiter (56) enthält, zur Verbindung des Überbrückungskammes (28) mit der entsprechenden Schiene (48R, 48S, 48T, 48N) des mehrpoligen senkrechten Sammelschienensystems (48), wobei der interne Leiter in direkten Kontakt mit der genannten Schiene beim Einführen der letzteren in den Verbindungssatz kommt.

3. Elektrischer Kasten zur Aufnahme von Modulgeräten gemäss Anspruch 2, dadurch gekennzeichnet, dass das Gehäuse (53) jedes Verbindungssatzes (50R-54T) Zugangsöffnungen (55) zu dem zugeordneten internen Leiter (56) aufweist, welche so ausgeführt sind, dass sie ein seitliches oder längliches Einführen der Schiene (48R, 48S, 48T, 48N) ermöglichen.

4. Elektrischer Kasten zur Aufnahme von Modulgeräten gemäss Anspruch 3, dadurch gekennzeichnet, dass ein Klemmelement (58) in dem Gehäuse (53) von jedem Verbindungssatz (50R-54T) angeordnet ist, um einen guten elektrischen Kontakt zwischen dem inneren Leiter (56) und der Schiene (48R, 48S, 48T, 48N) zu gewährleisten, nach Einführung dieser letzteren in die entsprechenden Öffnungen (55).

5. Elektrischer Kasten zur Aufnahme von Modulgeräten gemäss einem der beiden Ansprüche 3 oder 4, dadurch gekennzeichnet, dass jede Schiene (48R, 48S, 48T, 48N) des mehrpoligen senkrechten Sammelschienensystems (48) einen rechteckigen Querschnitt aufweist und flach in dem entsprechenden Verbindungssatz (50R-54T) gelagert ist, um eine maximale Kontaktoberfläche mit dem zugeordneten internen Leiter (56) zu erhalten.

6. Elektrischer Kasten zur Aufnahme von Modulgeräten gemäss Anspruch 3, dadurch gekennzeichnet, dass jede Schiene (48R, 48S, 48T, 48N) von rechteckigem Querschnitt hochkant in die Öffnungen (55) eingeführt wird, um mit einem elastischen Kontakt (66) in Form von einer mit dem internen Leiter (56) verbundenen Zange zusammenzuarbeiten.

7. Elektrischer Kasten zur Aufnahme von Modulgeräten gemäss einem der Ansprüche 2 bis 6, dadurch gekennzeichnet, dass der interne Leiter (56) jedes Verbindungssatzes (50R-54T) eine U-Form aufweist, deren mittleres Teil als Verbindungselement mit der entsprechenden Schiene (48R, 48S, 48T, 48N) dient, und deren entgegengesetzte Enden beziehungsweise mit einer Anschlussfahne (60) und einem Anschlusskasten (62) des Überbrückungskammes (28) der entsprechenden Reihe (12, 14, 16) verbunden sind, wobei die Wahl der Seite des Anschlusses jedes Verbindungssatzes von der Art der einzubauenden Modulklemmen (18) abhängig ist.

8. Elektrischer Kasten zur Aufnahme von Modulgeräten gemäss irgendeinem der vorhergehenden Ansprüche, dadurch gekennzeichnet, dass die Zuleitungskabel (34, 36, 38, 40) des mehrpoligen Netzes direkt an die Anschlussklemmen des senkrechten Sammelschienensystems (48) angeschlossen sind, und dass die Verbindungssätze (50R-54T) auf dem Niveau jeder Reihe (12, 14, 16) eine einpolige oder mehrpolige Struktur aufweisen.

9. Elektrischer Kasten zur Aufnahme von Modulgeräten gemäss irgendeinem der vorhergehenden Ansprüche, dadurch gekennzeichnet, dass die Höhe des Gehäuses (53) jedes Verbindungssatzes (50R-54T) der Höhe der ähnlichen Gehäuse der nebeneindanderliegenden Module (18) einer selben Reihe (12, 14, 16) entspricht, um aus der vorderen Seite des Kastens (10) bei der Anbringung einer Einsatzplatte herauszuragen.

10. Elektrischer Kasten zur Aufnahme von Modulgeräten gemäss irgendeinem der Ansprüche 1 bis 8, dadurch gekennzeichnet, dass die Höhe des Gehäuses (10) jedes Verbindungssatzes (50R-54T) geringer als die Höhe der Gehäuse der nebeneinanderliegenden Module (18) einer selben Reihe ist, so dass die Anbringung einer Einsatzplatte auf der vorderen Seite des Kastens (10) die vorderen Seiten der genannten Verbindungssätze verdeckt.

**Claims**

1. Electrical casing for receiving low-voltage modular switchgear, in particular circuit-breakers, fuses, switches, etc., staggered in a plurality of distribution rows (12-16) arranged horizontally in parallel planes staggered in the height sense of the casing according different levels, each row of a predetermined level comprising an assembling of modules (18) with moulded housings and linked to a support rail (20), the electrical supply of the different modules (18) of a same row (12, 14, 16) being performed by means of a comb connector (28) which is electrically connected to the multipole network and which extends in horizontal direction of the support rail (20) in order to ensure the electrical connection of the modules (18) of a same phase, characterized by the fact that multipole busbars (48) lying inside the casing (10) in height direction extend vertically between the extreme levels of the different distribution rows (12-16), and that the comb connector (28) of the modules (18) of each horizontal row (12-16) is connected electrically at a predetermined level with said vertical busbars (48) by means of an assembly block (50R-54T) mechanically secured to the support rail (20) of the corresponding row in order to ensure the holding of the busbars (48).

2. Electrical casing for receiving modular switchgear according to Claim 1, characterized by the fact that said assembly block (50R-54T) comprises an insulating housing (53) including per pole an inner conductor (56) for connecting the comb connector (28) with the corresponding busbar (48R, 48S, 48T, 48N) of vertical busbars (48), said inner conductor coming into direct contact with said busbar when inserting this latter in the assembly block.

3. Electrical casing for receiving modular switchgear according to Claim 2, characterized by the fact that the housing (53) of each assembly block (50R-54T) comprises openings (55) to have access to the associated inner conductor (56), said openings being shaped to allow a lateral or longitudinal insertion of the busbar (48R, 48S, 48T, 48N).

4. Electrical casing for receiving modular switchgear according to Claim 3, characterized by the fact that a clamp device (58) is lying in the housing (53) of each assembly block (50R-54T) in order to ensure a good electrical contact between the inner conductor (56) and the busbar (48R, 48S, 48T, 48N) after insertion of the latter in the corresponding openings (55).

5. Electrical casing for receiving modular switchgear according to Claim 3 or 4, characterized by the fact that each busbar (48R, 48S, 48T, 48N) of the vertical busbar (48) is of rectangular section and is lying flatwise in the corresponding assembly block (50R-54T) in order to obtain the greatest contact surface with the associated inner conductor (56).

6. Electrical casing for receiving modular switchgear according to Claim 3, characterized by the fact that each busbar (48R, 48S, 48T, 48N) of rectangular section is set on edge in the openings (55) to cooperate with an elastic contact (66) in form of a clamp secured to the inner conductor (56).

7. Electrical casing for receiving modular switchgear according to one of Claims 2 to 6, characterized by the fact that the inner conductor of each assembly block (50R-54T) is U-shaped, the center portion of which constitutes a connection device with the corresponding busbar (48R, 48S, 48T, 48N), and the opposite ends of which are connected respectively to a contact terminal (60) and a bracket (62), for the connection of said comb connector (28) of the corresponding row (12-16), the choice of the connection side of each assembly block depending on the type of the terminals of modules (18) to be installed.

8. Electrical casing for receiving modular switchgear according to any of the preceding Claims, characterized by the fact that the input cables (34, 36, 38, 40) of the multipole network are connected directly with the connection terminals of the vertical busbars (48) and that the assembly blocks (50R-54T) of each row (12-16) are of monopole of multipole structure.

9. Electrical casing for receiving modular switchgear according to any of the preceding Claims, characterized by the fact that the height of the housing (53) of each assembly block (50R-54T) corresponds to that of similar housings of juxtaposed modules (18) of a same row (12-16) in order to project outside the front side of the casing (10) when fastening a front plate.

10. Electrical casing for receiving modular switchgear according to any of Claims 1 to 8, charaterized by the fact that the height of the housing (53) of each assembly block (50R-54T) is lower than that of the housings of the juxtaposed modules (18) of a same row, so that the fastening of a front plate on the front face of the casing (10) covers the front faces of said assembly blocks.

0 063 970

Fig 1

Fig 2

Fig 3

7

Fig 4

Fig 5